# EUROPÄISCHE PATENTSCHRIFT

(11) **EP 0 505 018 B1**
(45) Veröffentlichungstag und Bekanntmachung des Hinweises auf die Patenterteilung: **12.07.1995**
(21) Anmeldenummer: 92250061.6
(22) Anmeldetag: 16.03.1992
(51) Int. Cl.: B01D 29/64, B01D 29/09, B01D 25/38, B01D 25/32

(54) **Etagenfilter**
Multi-stage filter
Filtre à plusieurs étages

(30) Priorität: 22.03.1991 DE 9103729 U
(43) Veröffentlichungstag der Anmeldung: 23.09.1992
(73) Patentinhaber: MANNESMANN Aktiengesellschaft, 40027 Düsseldorf (DE)
(72) Erfinder: Heintze, Burkhard, W-4174 Issum 1 (DE); Triesch, Josef, W-4000 Düsseldorf (DE)
(74) Vertreter: Meissner, Peter E., Dipl.-Ing.

(56) Entgegenhaltungen:
- EP-A- 0 304 597
- DE-A- 1 949 114
- DE-A- 2 917 986

## Beschreibung

Die Erfindung betrifft einen Etagenfilter, bestehend aus einer Vielzahl horizontal übereinander angeordneter Filterplatten, die jeweils von einem sie umschließenden Rahmen in parallelen Ebenen gehalten werden, wobei zwischen benachbarten Filterplatten und Rahmen jeweils abwechselnd eine Filtrat- und eine Trübekammer gebildet wird und jeweils zwischen zwei Filterplatten ein mittels einer Transportvorrichtung abschnittsweise bewegbares Filterband angeordnet ist, welches von einer außerhalb des Etagenfilters angeordneten Vorratsrolle ab- und nach dem Entfernen des Filterkuchens auf mindestens eine Sammelrolle aufwickelbar ist.

Etagenfilter dieser Bauart sind bekannt. Es sind Druckfilter, bei denen die Filterplatten mit ihren aufeinanderliegenden Rahmen zusammendrückbar sind, wobei das Filtrat durch in den Platten bzw. Rahmen vorgesehene Rahmen- bzw. Auslauföffnungen zu- und abführbar ist. Der Filtervorgang verläuft bei zusammengepreßten Platten, wobei das zwischen den Filterplatten angeordnete Filterband eingeklemmt wird. Das Filtrat fließt durch die Filterplatten hindurch, wobei Schmutzteile sich auf dem Filterband absetzen. Der dadurch entstehende Filterkuchen muß von Zeit zu Zeit aus dem Etagenfilter herausgeführt werden. Zu diesem Zweck werden mit einer entsprechenden Vorrichtung die Filterplatten mit ihren Rahmen auseinanderbewegt, so daß mit Hilfe einer Transportvorrichtung, beispielsweise einer Ausziehvorrichtung, der verschmutzte Abschnitt des Filterbandes herausgezogen und gleichzeitig sauberes Filterband nachgezogen wird.

Durch anschließendes Schließen der Filterplatten und Aufeinanderdrücken der Rahmen ist der Etagenfilter wieder einsatzbereit.

Bei herkömmlichen Bandfiltern wird der Filterkuchen jeweils an einer Umlenkrolle des Filterbandes abgestreift. d. h. durch Umlenken des Bandes wird der Filterkuchen gebrochen und bröckelt ab, so daß er in ein unterhalb des Filterbandes angeordnetes Aufnahmemittel fallen kann. Bei Etagenfiltern der gattungsgemäßen Art, wo mehrere Kammern übereinander angeordnet sind und somit auch mehrere Filterbänder übereinander verlaufen, ist diese Art der Entsorgung nachteilig, weil durch die Umlenkung des Filterbandes das nachgeschaltete Aufwickeln des vom Schmutzkuchen befreiten Filterbandes auf Sammelrollen aus platzgründen behindert wird. Auch entstehen Probleme für die Bandführung.

Ein bekannter Vorschlag (EP-A-03 04 597) schlägt vor, das Filterband um eine schräg zur Bandrichtung angeordnete Umlenkkante zu führen und dabei die untere Fläche des Bandes nach oben zu kehren. Damit soll einerseits eine bessere Führung des Bandes erreicht und andererseits ein effizientes Ablösen des Filterkuchens ermöglicht werden. Diese Lösung ist durch ihre Vielzahl von Umlenkrollen sehr aufwendig und damit anfällig und bedarf umfangreicher Wartung.

In der EP-A-0 414 341 wird eine Fördereinrichtung zum Austragen von suspendierten Teilchen aus einem Flüssigkeitsstrom beschrieben.

Der vorliegenden Erfindung liegt ausgehend von diesem Stand der Technik die Aufgabe zugrunde, einen Etagenfilter der gattungsgemäßen Art so zu verbessern, daß bei geradliniger Bandführung ein einfaches Abstreifsystem ein sicheres Entfernen des Schmutzkuchens vom Filterband ermöglicht.

Zur Lösung der Aufgabe wird erfindungsgemäß vorgeschlagen, daß zum Abstreifen des Filterkuchens vom Filterband zwischen Etagenfilter und Sammelrolle mindestens ein in der Ebene des Filterbandes schräg zur Transportrichtung des Filterbandes angeordneter, auf der Oberfläche des Filterbandes aufliegender Abstreifer vorgesehen ist, dem ein unterhalb des Filterbandes vorgesehenes Widerlager zugeordnet ist.

Mit einem einfachen solchen Abstreifer wird beim Transportieren des verschmutzten Filterbandes der Filterkuchen vom Band abgekratzt.

Als besonders günstig hat sich herausgestellt, wenn der Abstreifer aus einem biegesteifen Profil besteht, das sich über die gesamte Filterbandbreite erstreckend schräg zur Laufrichtung des Filterbandes angeordnet ist und den Filterkuchen in eine Richtung seitlich neben das Filterband leitet.

Durch die vorgesehene Ausbildung des Abstreifers wird ein verschleiß-und wartungsarmes sehr einfaches Abstreifsystem geschaffen, das darüber hinaus platzsparend und kostengünstig ist. Die schräge Anordnung des Abstreifers führt beim Transport des Filterbandes den Schmutzkuchen seitlich neben das Filterband, wo an der Abwurfstelle ein Behälter angeordnet ist.

In einer Ausgestaltung der Erfindung ist vorgesehen, daß das Widerlager ein das Filterband gegen den Abstreifer haltendes Andrückblech ist. Der geringe Abstand zwischen Andrückblech und Bundstreifer läßt den Abstreifer wie ein Schabmesser den Filterkuchen lösen und seitlich abtransportieren.

Nach einem anderen Vorschlag der Erfindung ist vorgesehen, daß der Abstreifer V-förmig derartig auf dem Filterband aufliegend angeordnet ist, daß die Schenkel des Abstreifers in Transportrichtung des Filterbandes beidseitig nach außen verlaufen. Diese Lösung hat den Vorteil, daß jeweils nur ein Teil des Schmutzkuchens nach einer Seite des Filterbandes und der andere Teil zur anderen Seite des Filterbandes transportiert werden muß.

In einer weiteren Ausgestaltung der Erfindung ist vorgesehen. daß mehrere im wesentlichen parallel zueinander verlaufende Abstreifer vorgesehen sind, die in einer in Transportrichtung gedachten Projektion sich einander über die gesamte Filterbandbreite überdecken. Durch diese Lösung wird der Schmutzkuchen in mehrere Teilmengen aufgeteilt, so daß nicht Schmutzkuchenmengen von einer Seite des Filterbandes über das gesamte Filterband hinweg zur anderen Seite transportiert werden müssen.

Eine besonders günstige Lösung besteht darin, daß das Widerlager ein schräg zur Filterbandlaufrichtung angeordnetes abgerundetes Profil ist, dem ein in Transportrichtung nachgeordneter parallel dazu angeordnete Abstreifer zugeordnet ist, wobei die Abstreifkante des Abstreifers in die Filterbandebene eintauchend, das Filterband über das Widerlager walkt. Durch diesen Vorschlag wird in besonders günstiger Weise mittels des Walkvorganges der Schmutzkuchen vom Filterband gelöst und durch den Abstreifer sicher entfernt.

Ausführungsbeispiele der Erfindung sind in der Zeichnung dargestellt und werden nachfolgend beschrieben. Es zeigt jeweils in Seitenansicht und Draufsicht:
- Fig. 1: einen schräg angeordneten Abstreifer,
- Fig. 2: einen V-förmigen Abstreifer,
- Fig. 3: mehrere zusammenwirkende Abstreifer und
- Fig. 4: eine Walkvorrichtung mit Abstreifer.

In allen Zeichnungsfiguren ist mit 1 das Filterband bezeichnet, das beispielsweise aus einem Faserflies besteht. In der grob schematischen Darstellung ist bei 2 der Etagenfilter angedeutet, der aus mehreren übereinander angeordneten Filterplatten 3 besteht, von denen zwei das Filterband 1 einschließende Filterplatten 3 dargestellt sind. Das Filterband wird von einer Vorratsrolle 4 abgerollt und in auseinander gefahrener Stellung der Filterplatten 3 mit Hilfe der nicht näher erklärten Transportvorrichtung 5 um eine Taktlänge aus dem Etagenfilter 2 herausgezogen, um den auf dem Filterband angesammelten Schmutzkuchen zu entfernen. Das vom Schmutzkuchen gereinigte Filterband 1 wird bei 6 auf eine Sammelrolle aufgewickelt und kann später einem Reinigungsvorgang zugeführt werden.

Zum Abstreifen des Schmutzkuchens vom Filterband 1 ist der Abstreifer 7 vorgesehen, der aus einem Flacheisenprofil besteht, welches quer und schräg (wie die Draufsicht zeigt) auf der Oberfläche des Filterbandes 1 durch (nicht dargestellte) Haltemittel gehalten wird. An der Unterseite des Filterbandes 1 ist ein Widerlager 8 vorgesehen, was beispielsweise aus einem Andrückblech besteht, welches sich über die gesamte Unterseite des Filterbandes 1 im Bereich des Abstreifes 7 erstreckt.

Beim Transportieren des Filterbandes 1 in Transportrichtung 9 wird der aus dem Etagenfilter 2 herausgezogene Schmutzkuchen durch den Abstreifer 7 gelöst und in Pfeilrichtung 10 vom Filterband 1 seitlich heruntergeschoben. In vorteilhafter Weise greift die Transportvorrichtung, die aus das Filterband zwischen sich einklemmenden Quetschrollen besteht, an dem sauberen Filterband an, um es der Aufwickelrolle zuzuführen.

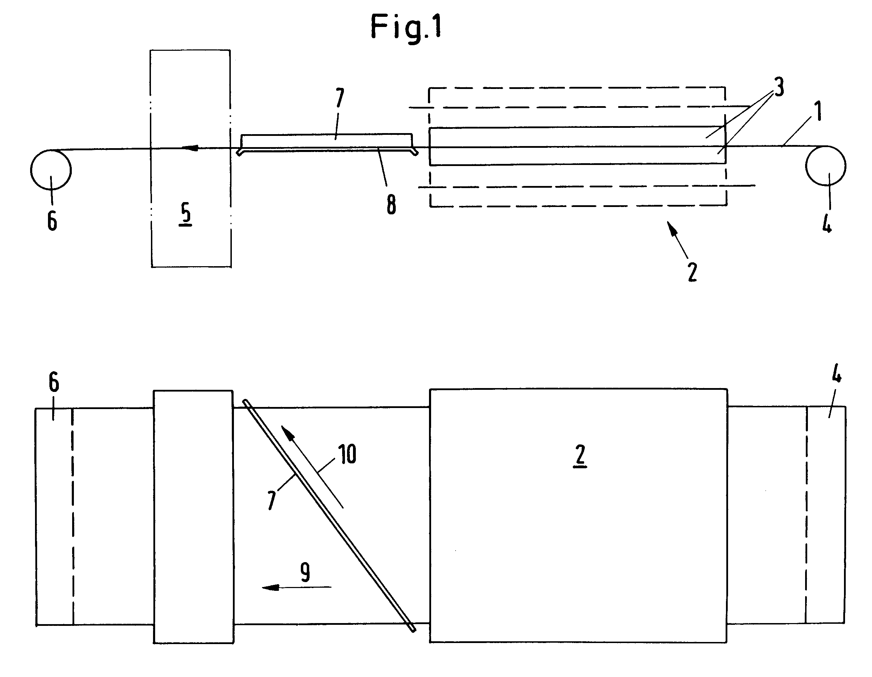

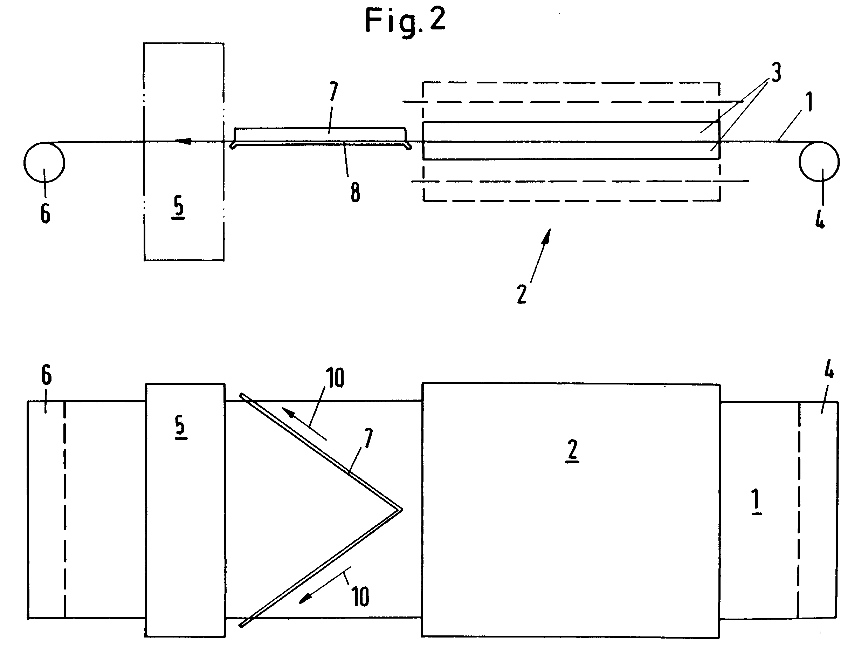

Eine andere erfindungsgemäße Abstreifeinrichtung ist in Figur 2 dargestellt. Gleiche Teile sind gleich bezeichnet. Im Unterschied zu Figur 1 ist der Abstreifer 7 hier V-förmig ausgebildet, wobei die Spitze entgegen der Transportrichtung des Filterbandes 1 gerichtet ist und die Schenkel in Transportrichtung nach außen verlaufen. Hierdurch wird der Schmutzkuchen auf dem Filterband in zwei Teilmengen aufgeteilt, die in den Pfeilrichtungen 10 beidseitig des Filterbandes abgeworfen werden. Diese Vorrichtung hat den Vorteil, daß eine Schmutzkuchenmenge jeweils nur maximal über eine halbe Breite des Filterbandes transportiert werden muß.

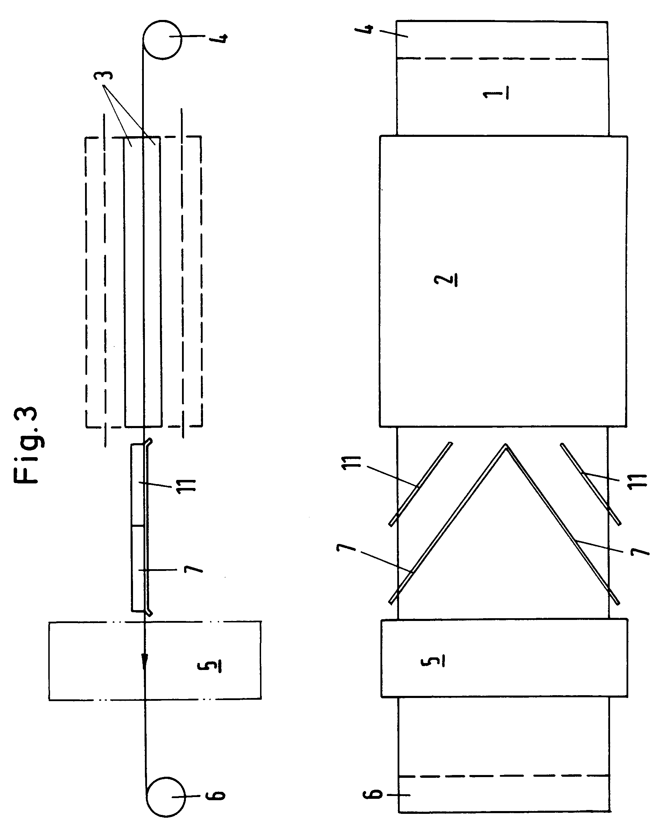

Um zu verhindern, daß sich größere Mengen des Schmutzkuchens im Randbereich anstauen, ist eine andere Ausgestaltung des Abstreifers vorgeschlagen, die in Figur 3 dargestellt ist. Hier werden zusätzlich zum V-förmigen Abstreifer 7 zwei weitere Abstreifer 11 parallel zu den Schenkeln des Abstreifers 7 angeordnet, die jedoch nur den Randbereich des Filterbandes 1 überstreichen. Diese Abstreifer 11 nehmen einen Teil des Schmutzkuchens aus dem Randbereich bereits ab, so daß der Abstreifer 7 den Mittenbereich des Filterbandes 1 abstreift und es im Randbereich des Abstreifers 7 nicht zum Stau des Schmutzkuchens kommt.

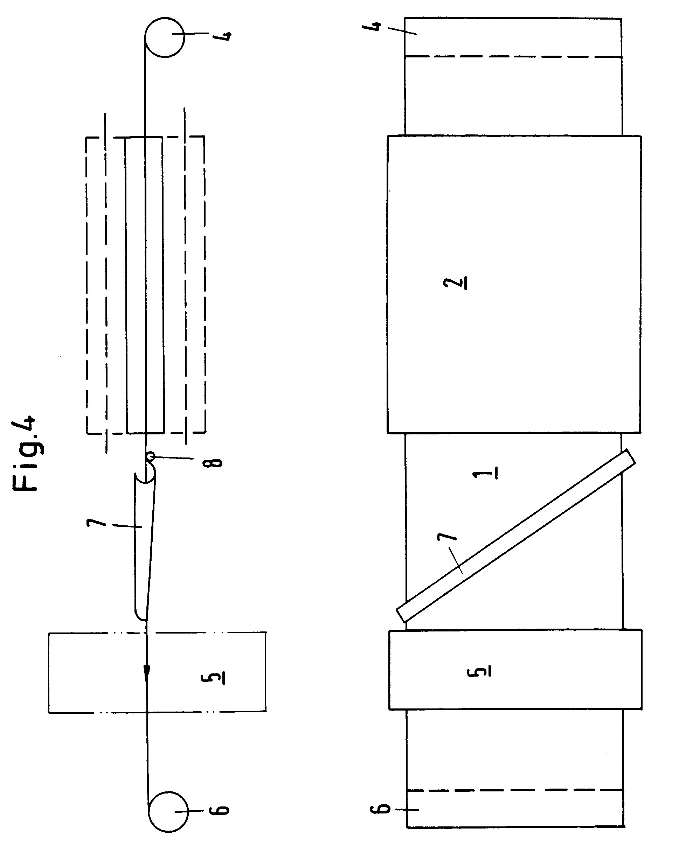

Besonders günstig arbeitet der Abstreifer, der in Figur 4 dargestellt ist. Bei dieser Variante ist das Widerlager 8 als Rundstab ausgebildet, über den das Filterband 1 geführt wird. Der an der Oberseite des Filterbandes 1 angeordnete Abstreifer 7 wird soweit nach unten angestellt, daß er das Filterband 1 über das Widerlager 8 zwangsführt und dadurch ein Brechen des Schmutzkuchens bewirkt. Der so vom Filterband gelöste Schmutzkuchen wird durch den Abstreifer 7, der hier schalenförmig geformt ist, in gleicher Weise, wie anhand der Figur 1 beschrieben, seitlich vom Filterband in Richtung 10 abgeführt.

## Patentansprüche

1. Etagenfilter (2), bestehend aus einer Vielzahl horizontal übereinander angeordneter Filterplatten (3), die jeweils von einem sie umschließenden Rahmen in parallelen Ebenen gehalten werden, wobei zwischen benachbarten Filterplatten und Rahmen jeweils abwechselnd eine Filtrat- und eine Trübekammer gebildet wird und jeweils zwischen zwei Filterplatten ein mittels einer Transportvorrichtung (5) abschnittsweise bewegbares Filterband (1) angeordnet ist, welches von einer außerhalb des Etagenfilters angeorndeten Vorratsrolle (4) ab- und nach dem Entfernen des Filterkuchens auf mindestens eine Sammelrolle (6) aufwickelbar ist,
dadurch gekennzeichnet, daß
zum Abstreifen des Filterkuchens vom Filterband (1) zwischen Etagenfilter und Sammelrolle (6) mindestens ein in der Ebene des Filterbandes schräg zur Transportrichtung (9) des Filterbandes (1) angeordneter, auf der Oberfläche des Filterbandes (1) aufliegender Abstreifer (7) vorgesehen ist, dem ein unterhalb des Filterbandes vorgesehenes Widerlager (8) zugeordnet ist.

2. Etagenfilter nach Anspruch 1,
dadurch gekennzeichnet,
daß der Abstreifer (7) aus einem biegesteifen Profil besteht, das sich über die gesamte Filterbandbreite erstreckend schräg zur Transportrichtung des Filterbandes angeordnet ist und den Filterkuchen in eine Richtung (10) seitlich neben das Filterband (1) leitet.

3. Etagenfilter nach Anspruch 1 oder 2,
dadurch gekennzeichnet,
daß das Widerlager (8) ein das Filterband gegen den Abstreifer haltendes Andrückblech ist.

4. Etagenfilter nach Anspruch 1, 2 oder 3,
dadurch gekennzeichnet,
daß der Abstreifer (7) V-förmig derartig auf dem Filterband (1) aufliegend angeordnet ist, daß die Schenkel des Abstreifers in Transportrichtung des Filterbandes beidseitig nach außen verlaufen.

5. Etagenfilter nach Anspruch 2,
dadurch gekennzeichnet,
daß mehrere, im wesentlichen parallel zueinander verlaufende Abstreifer (7, 11) vorgesehen sind, die in einer in Transportrichtung gedachten Projektion sich einander über die gesamte Filterbandbreite überdecken.

6. Etagenfilter nach Anspruch 1,
dadurch gekennzeichnet,
daß das Widerlager (8) ein schräg zur Transportrichtung des Filterbandes angeordnetes abgerundetes Profil ist, dem ein in Transportrichtung nachgeordneter parallel dazu angeordnete Abstreifer (7) zugeordnet ist, wobei die Abstreifkante des Abstreifers in die Filterbandebene eintauchend, das Filterband über das Widerlager walkt.

## Claims

1. Multi-stage filter (2) consisting of a plurality of filter plates (3) which are arranged horizontally one above the other and are each held in parallel planes by a frame which surrounds them, a filtrate and a slurry chamber being formed alternately between adjacent filter plates and frames, and a filter belt (1), which can move in sections by means of a conveying device (5), in each case being arranged between two filter plates, which belt can be wound off a supply roll (4), which is arranged outside of the multi-stage filter, and onto at least one collecting roll (6) following the removal of the filter cake, characterised in that at least one scraper (7), which is arranged in the plane of the filter belt at a slant to the direction (9) in which the filter belt (1) is conveyed and lies on the surface of the latter, is provided to scrape the filter cake off the filter belt (1) between the multi-stage filter and the collecting roll (6), with which scraper an abutment (8), which is provided below the filter belt, is associated.

2. Multi-stage filter according to claim 1, characterised in that the scraper (7) consists of a rigid section which, extending over the entire filter belt width, is arranged at a slant to the direction in which the filter belt is conveyed and guides the filter cake in a direction (10) to the side of the filter belt (1).

3. Multi-stage filter according to claim 1 or 2, characterised in that the abutment (8) is a pressure plate which holds the filter belt against the scraper.

4. Multi-stage filter according to claim 1, 2 or 3, characterised in that the scraper (7) lies on the filter belt (1) in the shape of a V such that the legs of the scraper extend outwards on both sides in the direction in which the filter belt is conveyed.

5. Multi-stage filter according to claim 2, characterised in that a plurality of scrapers (7, 11), which essentially extend parallel to one another, are provided, which scrapers overlap over the entire filter belt width in a projection which is imagined in the conveying direction.

6. Multi-stage filter according to claim 1, characterised in that the abutment (8) is a rounded section which is arranged at a slant to the direction in which the filter belt is conveyed and with which a scraper (7) is associated, which scraper is arranged parallel to the section and after the latter in the conveying direction, wherein the scraping edge of the scraper, which dips into the filter belt plane, presses the filter belt over the abutment.

## Revendications

1. Filtre à étages (2) constitué d'une pluralité de plaques de filtrage (3) horizontales, agencées les unes au-dessus des autres et maintenues à chaque fois dans des plans parallèles par un cadre qui les entoure, entre des plaques de filtrage et le cadre voisins étant formées à chaque fois de façon alternative une chambre à filtrat et une chambre à eau boueuse, et une bande de filtrage (1) mobile par tronçons au moyen d'un dispositif de transport (5) étant à chaque fois agencée entre deux plaques de filtrage, bande de filtrage qui peut être déroulée d'un galet de réserve (4) agence à l'extérieur du filtre à étages et être enroulée après l'évacuation du gâteau de filtrage sur au moins un galet de collecte (6),
caractérisé en ce que, pour racler le gâteau de filtrage de la bande de filtrage (1) entre le filtre à étages et le galet de collecte (6), on prévoit au moins un racloir (7) agencé dans le plan de la bande de filtrage de façon inclinée par rapport au sens de transport (9) de la bande de filtrage (1) et reposant sur la surface de la bande de filtrage (1), auquel racloir est associée une butée (8) prévue au-dessous de la bande de filtrage.

2. Filtre à étages selon la revendication 1,
caractérisé en ce que le racloir (7) est constitué d'un profilé rigide à la flexion, agencé en s'étendant sur toute la largeur de la bande de filtrage de façon inclinée par rapport au sens de transport de la bande de filtrage, et guidant le gâteau de filtrage dans un sens (10) latéral à la bande de filtrage (1).

3. Filtre à étages selon l'une des revendications 1 ou 2,
caractérisé en ce que la butée (8) est une tôle de pressage maintenant le racloir contre la bande de filtrage.

4. Filtre à étages selon l'une des revendications 1, 2 ou 3,
caractérisé en ce que le racloir (7) est agencé en forme de V, en reposant sur la bande de filtrage (1), de sorte que les branches du racloir s'étendent, dans le sens de transport de la bande de filtrage, des deux côtés vers l'extérieur.

5. Filtre à étages selon la revendication 2,
caractérisé en ce que l'on prévoit plusieurs racloirs (7,11) s'étendant pour l'essentiel de façon parallèle les uns par rapport aux autres et se recouvrant les uns les autres, dans une projection imaginaire dans le sens de transport, sur toute la largeur de la bande de filtrage.

6. Filtre à étages selon la revendication 1,
caractérisé en ce que la butée (8) est un profilé arrondi et agencé de façon inclinée par rapport au sens de transport de la bande de filtrage, auquel est associé un racloir (7) monté en aval dans le sens de transport et agencé parallèlement à celui-ci, le bord de raclement du racloir foulant la bande de filtrage sur la butée en plongeant dans le plan de la bande de filtrage.
